# EUROPEAN PATENT SPECIFICATION

(11) **EP 1 202 310 B1**
(45) Date of publication and mention of the grant of the patent: **14.05.2003**
(21) Application number: 00912669.9
(22) Date of filing: 28.03.2000
(51) Int. Cl.: H01H 23/04, H01H 23/14

(54) **MODULAR SET FOR ELECTRICAL MECHANISMS**
MODULARE VORRICHTUNG FÜR ELEKTRISCHE MECHANISMEN
ENSEMBLE MODULAIRE POUR MECANISMES ELECTRIQUES

(30) Priority: 04.06.1999 ES 9901226; 03.11.1999 ES 9902406
(43) Date of publication of application: 02.05.2002
(73) Proprietor: Schneider Electric Espana, S.A., 08007 Barcelona (ES)
(72) Inventor: SUESCUN ORRILLO, Cesar, E-31180 Cizur Mayor (ES)
(74) Representative: Evens, Paul Jonathan
(86) International application number: ES0000110
(87) International publication number: WO00075948

(56) References cited:
- ES-A1- 2 144 956
- ES-A6- 2 023 307
- ES-U- 1 038 039
- ES-U- 1 041 441

## Description

The electrical mechanisms, such as switches or similar, which are installed flush mounted in the corresponding wall, are formed by a set that can be incorporated on a basic case flush mounted in the place of application. According to some already known realizations the mentioned set includes a metallic frame to be fastened on the embedded case, which is covered with an embellishing plate, unique or complementary to a surrounding frame, including moreover the set an intermediate piece and the piece which is built up of the operating key in the case of switches.

According to an already known realization, the intermediate piece is made of plastic material, in which some wires which are outstanding, as connection lugs, remain imbibed behind the mentioned intermediate piece, to be hooked into the frame, pressing the latter between the mentioned intermediate piece and the frame support.

In another also known realization the wire lugs are formed by some metal plate. They basically fulfil the same function as those indicated here above.

In a third also known realization, the intermediate piece is formed by two parts which can be connected to each other.

ES-A-2 023 307, for example, discloses a device according to the preamble of claim 1.

All these realizations suffer a common defect as there is no positional relationship between the frame and the key of the device, which can give rise to positional displacement between both, which, aesthetically is very negative, since when looking at the device when assembled these particular parts are precisely the ones which are basically seen and the adjustment between both is carried out so as to avoid that the inside of the device can be seen, and any shifting referring to the position between both parts can give rise not only to an aesthetical rejection but also to mal-functioning.

On the other hand, in most of the already known realizations, the intermediate piece is visible from the outside, at least partially, which again, implies some demanding conditions as for its finish and positioning respect to the key and the frame, complicating the execution and the assembly of the set.

Another negative aspect of the traditional realizations resides in the fact that in all of them the hooking of the lugs of the intermediate piece is carried out behind the wall plane, i.e. that the hooking lugs enter inside the basic case, which can give rise to unwished encounters between these lugs and the electric drivers that lean out of the basic case for their connection to the device. What is more, these encounters between the lugs and the conductors can give rise to pushing on such conductors, with the risk of taking them out of the pressure parts where their connection is carried out, which would originate flaws in the mechanism and undue risk.

Another important negative aspect of most of the traditional solutions resides in the fact that for the connection between the different components of the device, screws and similar union means are necessary, which complicate said assembly, requiring a great amount of time to install, which is particularly important for the installation of big facilities.

The solution, now claimed, proposes a device as defined in claim 1, which brings about the following features:
- The intermediate piece itself is the nexus of the positional relationship between the key and the frame, warranting this way on always perfect adjustment and disposition between both.
- The fastening between the intermediate piece and the metallic frame is established outside the wall plane; so that it does not affect the inside of the basic case; avoiding this way coincidences between the fastening elements and the conductors.
- The assembling between all the components of the mechanism is carried out without the use of any screws, only by means of connecting such parts.

In accordance with said claimed solution, a modular set is proposed for the mentioned electrical mechanisms, which is especially advantageous in the constructive, functional and assembly aspects.

This set, object of the invention, includes an. intermediate piece that can be connected by means of pressure fitting with respect to a basic frame, on this intermediate piece a covering plate is solidarily incorporated, while the activating keys of the devices are situated in assembly with respect to the intermediate piece, establishing during the mentioned assembly a retention connection which avoids the accidental disassembly.

In one embodiment, the intermediate piece and the cover plate are joined by thermowelding, forming the whole an only assembly set, being determined the union by some outstanding ribs at the upper part of said intermediate piece by means of which the thermowelded union is established.

In one embodiment, in connection with the sides of the modular set some accessory finishing parts are situated which are hooked with respect to the covering plate by means of pressure fitting with some T-shaped lugs, which determine the retention securing by means of some outstanding points at the edge of the covering plate.

This way a set is obtained in which the cover plate and the intermediate piece forms an only element, so that the construction of the mentioned plastic parts offers the advantage of a reduced cost, while the solidary union of the parts confers the necessary rigidity for their use in application assembly. The intermediate piece remains moreover completely below the cover plate, so that it does not affect the external aspect of the set during the installation.

In the modular set all the component elements are fastened with respect to the unitary block formed by the cover plate and the intermediate piece, which determines an adequate positioning relative to the whole composition set and moreover a stable fastening of all the components. Concretely, as the intermediate piece is fixed with respect to the cover plate and the activating button is fastened with respect to the intermediate piece, the relative position between the key and the cover plate is always the same, avoiding position mis-alignments.

In another embodiment, the fastening connection between the basic frame and the intermediate piece, is established before the wall plane, which is the one of the frame support, allowing a bigger space of the rear hole for the application mechanism location, and moreover without affecting the inside of the flush mounted case, with which the incidence of the fastening elements against the electric conductors of the installation is avoided.

According to another embodiment, in the assembly below the mechanism activating buttons an intermediate frame is included, which is supported by means of some extreme lugs on structures of the interior edge of the intermediate piece, coming out from the mentioned extreme lugs of said frame some projections as straps, which are dampening stops to soften the operation of the corresponding key and to reduce the sound effect of the mentioned operation.

Said intermediate frame is foreseen of a particular realization in function of the fact that the activating keys are simple or double, so that for the double keys a supporting bridge and some hooking structures are determined in the central area which allow the fastening of the semi keys.
Figure 1 represents an exploded perspective of the set according to the invention in a practical realization for a switching device.

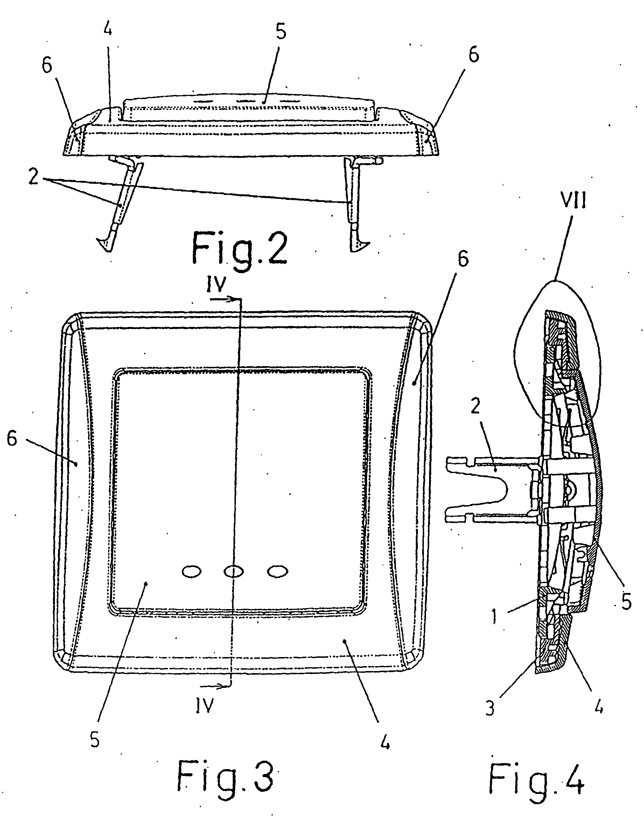

Figure 2 is an elevated view of the mounted set corresponding to the previous figure.
Figure 3 is a front view of the same mounted set of the previous figure.
Figure 4 is a sectioned lateral view according to cutting IV-IV indicated on the previous figure.

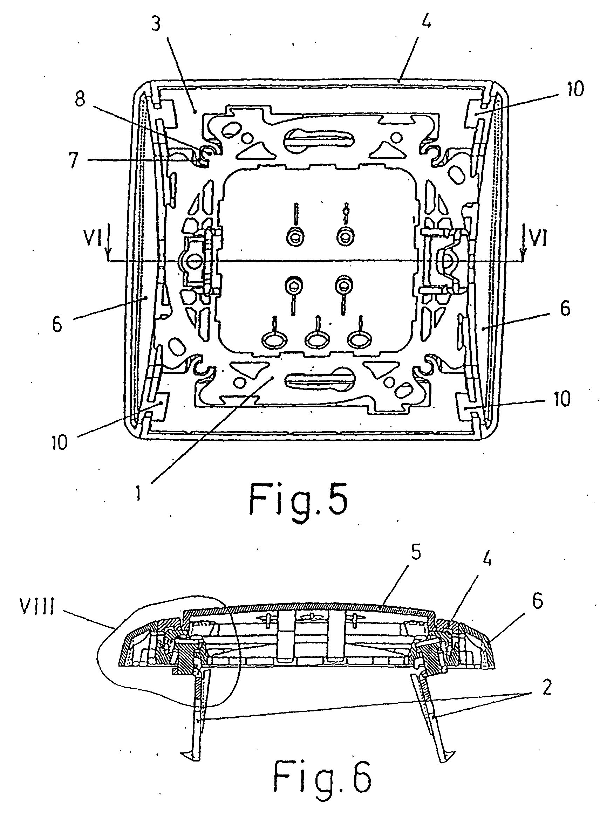

Figure 5 is a rear view of the same set of the previous figures.
Figure 6 is a view in transverse section, according to cut VI-VI indicated on the previous figure.
Figure 7 is an amplified detail of the encircled area VII on figure 4.
Figure 8 is an enlarged detail of the encircled area VIII on figure 6.
Figure 9 is a perspective view from the lower part of the cover plate of the modular set.
Figure 10 is a perspective of one of the accessory finishing of the sides of the modular set.
Figure 11 is a perspective, seen from the upper part of the intermediate piece of the modular set, according to the realization of figure 1.
Figure 12 is an exploded perspective of a modular set according to the invention, in a double practical realization, with a unitary activating key on one of the parts and a sectioned key on the other, of which only one of the halves has been represented, including the intermediate assembly frames in the disposition of the keys.
Figure 13 is an enlarged perspective of the intermediate frame which can be incorporated in the assembly of the unitary keys.
Figure 14 is an amplified perspective of the intermediate frame which can be incorporated in the assembly of the divided keys according to two independent semi-keys.

The object of the invention refers to a modular set destined to electrical mechanisms, such as switches, current outlets through plugs, etc..., prepared in connection with an embedded case in the application site.

The set includes a basic frame (1), which can be foreseen of anchoring means (2), being these hooks or any other conventional type; being the mentioned frame (1) preferably made of metallic injection.

On the frame (1) an intermediate piece (3) is incorporated, realized in injected plastic, which is held by pressure fitting with respect to the frame (1), having above it a cover plate (4), through which the respective operating key (5) of the mechanism in the case of switches is situated; while at the sides the set is complemented with some accessory finishing (6).

The fastening between the intermediate piece (3) and the frame (1) is through pressure fitting between the respective structures (7) and (8) defined by the material of the mentioned elements itself, being determined the structures (7) of the intermediate piece (3) as open rings, while the structures (8) of the frame (1) are determined as some externally conic bosses, which can be inserted in the mentioned ring shapes (7) of the intermediate piece (3).

In the same way the realization of the structures (7) and (8) could be inverted, i.e. having the structures (8) bosses on the intermediate piece (3) and the annular structures (7) in the frame (1), without altering therefore the essentiality of the concept, as the fixing result is the same.

According to a characteristic, the intermediate piece (3) and the cover plate (4) are carried out in a solidary union, which is foreseen already prepared when leaving the manufacturing process, building up an only element for its assembly.

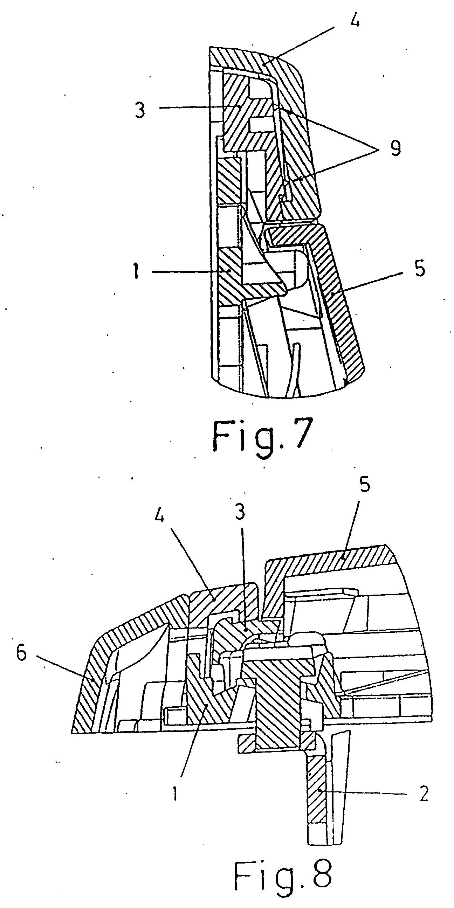

The mentioned union between the intermediate piece (3) and the cover plate (4) is determined by thermowelding, being foreseen to the effects the intermediate piece (3) with some ribs (9) which are outstanding at the upper part, by means of which the thermowelded union is determined with respect to the cover plate (4), as it can be appreciated on figure 7.

The cover plate (4) covers moreover the intermediate piece (3) completely, so that in the application assembly both the intermediate piece (3) and the frame (1) remain completely hidden, without it thus-being necessary to carry out a specific finish referring to the aspect of the modular set in its application.

The realization of the set can be destined to one or more application elements, so that the cover plate (4) and the intermediate piece (3) are determined with a specific form for each case, being simple for the sets with one element and with double, triple, etc... dimension for sets with two, three or more elements; while the frame (1) is simple in all the cases, so that in the sets of two or more elements correspondingly two or more simple frames (1) are situated, on which the assembly of the set built up of the intermediate piece (3) and the cover plate (4) with their corresponding dimensions is established.

The accessory finishing pieces (6) of the sides are connected to the cover plate (4), being the mentioned hooking carried out by means of some T-shaped lugs (10) situated on the mentioned accessory fittings (6), which are inserted respect to the corresponding notches (11) defined in the lateral edges of the cover plate (4).

With this assembly a perfect positioning of the mentioned accessory finishing (6) is reached, avoiding the possibility to misaligning during their positioning. At the sides of the cover plate (4) moreover some prominent points (12) are standing out. They determine the retention of the mentioned accessory finishing (6) in the assembly, establishing this way a perfect fastening of the same.

The activating keys (5) of the switch mechanisms are incorporated in the assembly by means of the insertion at its upper part through an opening (13) determined by the cover plate (4), establishing the mentioned keys (5) in tiltable disposition respect to the intermediate piece (3), with a retention connection which avoids the accidental disassembly.

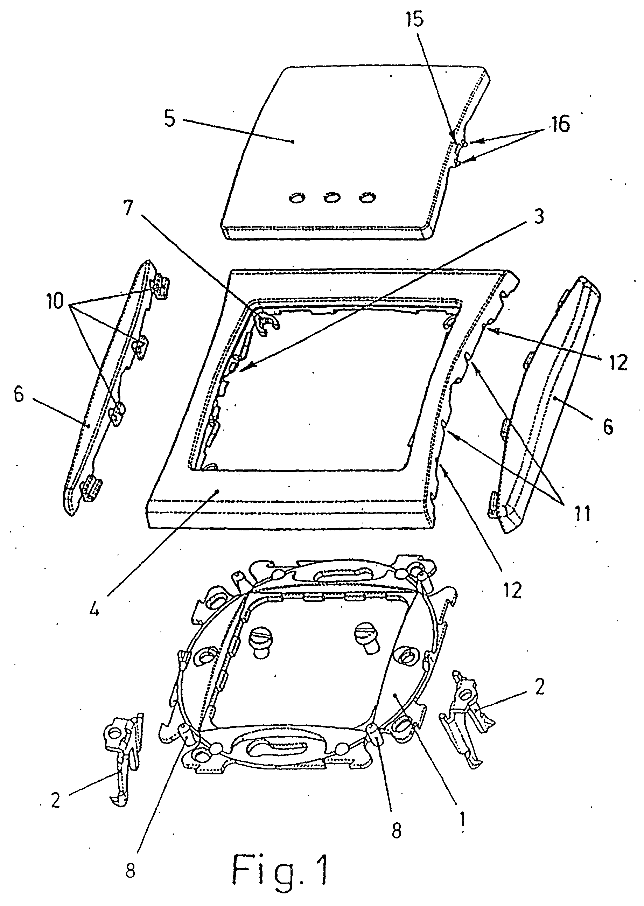

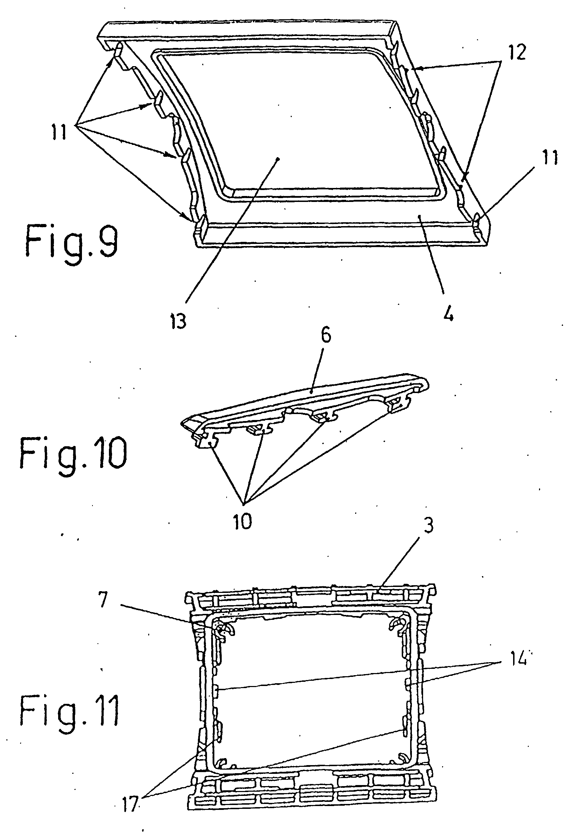

According to a realization, in the way indicated on figure 1, the mentioned assembly of the keys (5) is determined according to a switchable assembly on some supporting structures (14) defined in the intermediate piece (3), which can be observed in the representation of figure 11, on this structure the keys (5) rest in tilting disposition; while next to the supporting seats (15) of the mentioned structures (14), the keys (5) are moreover provided with some prominent points (16), by means of which a retention is established with respect to the intermediate piece (3) itself, which assures the assembly of the mentioned keys (5) without the risk that these get disconnected when operated in the practical function of its application.

In the intermediate piece (3) on the other hand some flexible lugs (17) are foreseen, which stand out at the inner edge. They serve as a tilting stop of the keys (5), having a dampening effect which gives softness to the operation and avoids the sound effect of the same.

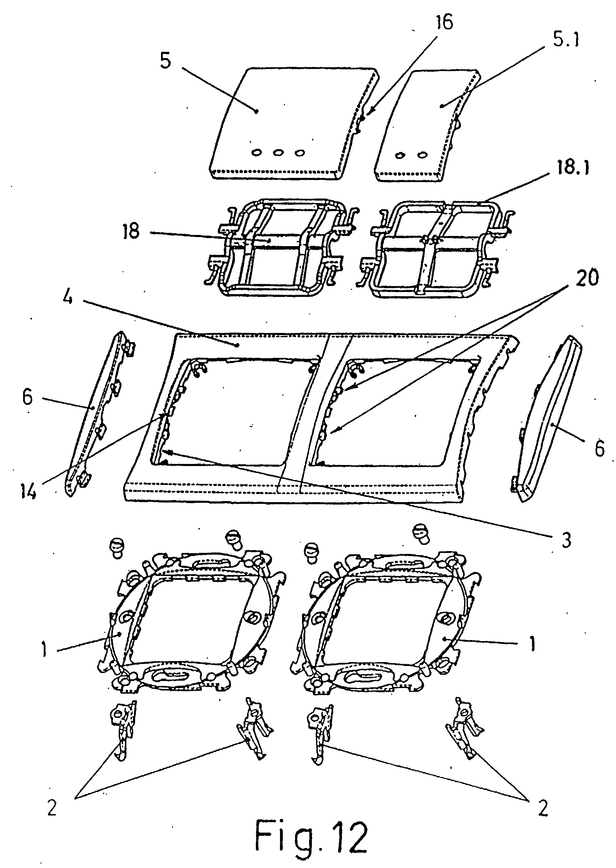

According to a realization, in figure 12, below the keys (5) an intermediate frame (18) can be incorporated, from which at its end some lugs (19) stand out, by means of which the supporting assembly is established on some structures (20) from the inner edge of the intermediate piece (3).

From the mentioned lugs (19) of this intermediate frame (18), some projections come out (21) as straps, which act as supporting stops of the corresponding key (5) in its tilting, thus building up the mentioned projections (21) dampening stops for the key operation (5), being able to carry out an intermediate piece (3) without the lugs (17) for the mentioned function.

The keys (5) can nevertheless be independent for the activation of an only application device, but they can also be divided into two halves (5.1), for the operation of two different mechanisms situated in the same sector of the apparatus.

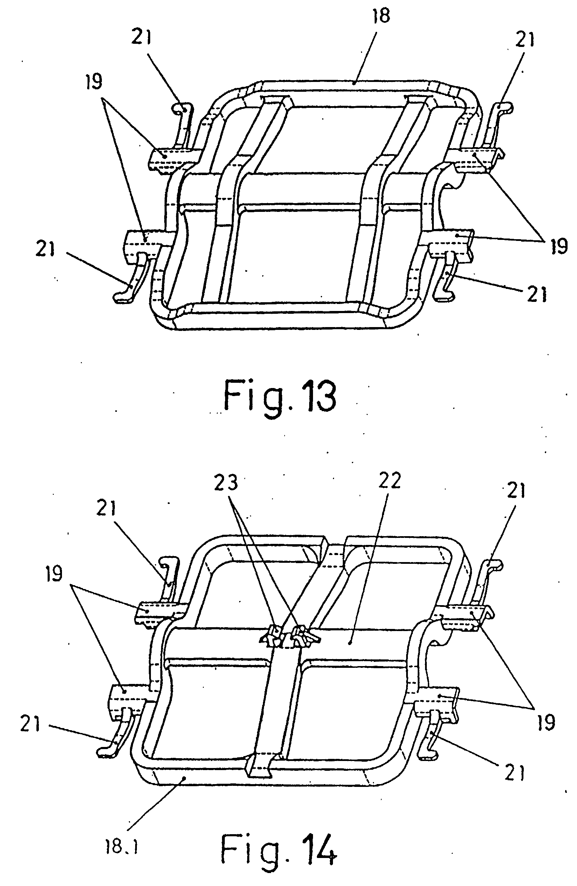

In accordance with this the intermediate frame is foreseen in a realization (18), as the one represented on figure 13, for the assembly of the independent keys (5), and according to a realization (18.1), as the one represented on figure 14, for the assembly of the keys built up of two independent semi-keys (5.1).

The frame (18.1) with destination to the assembly of the keys built up by two independent semi-keys (5.1), is foreseen in this case with a central bridge (22), on which the tiltable support of the semi-keys (5.1) is established including the mentioned bridge (22) in the central area some structures (23) which serve as a hook to hold the semi-keys (5.1) in an independent way in this central area.

The fastening which determines the structures (7) and (8)in the assembly connection between the intermediate piece (3) and the corresponding frame (1), is established before the wall plan against which the frames (1) are supported in the installation, which gives rise to a disposition which leaves the rear housing completely free. This housing defined by the locating case for the mechanisms and connection cables, avoiding every incidence which can affect the mentioned elements.

## Claims

1. A modular set for an electrical switching mechanism, comprising: a metallic frame (1), an intermediate piece (3) and a cover plate (4), onto which complementary side fittings (6) are mounted, the upper part of the cover plate including one or more keys (5) for operating the electrical switching mechanism; **characterised in that** the intermediate piece (3) and the cover plate (4) are joined to provide a single element which is connected to the frame (1), by press-fitting, to form an assembly; and **in that** the or each key (5) is pivotally mounted on, and secured to, the assembly to tilt relative to the intermediate piece.

2. Modular set for an electrical switching mechanism, according to the first claim, **characterized in that** the union between the intermediate piece (3) and the cover plate (4) is established by thermowelding, being the mentioned union carried out by means of some outstanding ribs (9) at the upper part of the intermediate piece (3), through which the thermowelding becomes effective.

3. Modular set for an electrical switching mechanism, according to the first or second claim, **characterized in that** the cover plate (4) hides the intermediate piece (3) completely, remaining the latter completely unseen in the assembly.

4. Modular set for an electrical switching mechanism, according to the first claim, **characterized in that** the fastening of the set formed by the intermediate piece (3) and the cover plate (4) with respect to the basic frame (1) is established by means of some reciprocal structures (7) and (8) defined by the material of the intermediate piece(3) and the frame (1) themselves, having the structures (7) the shape of some open rings, while the structures (8) are determined as some outwardly conic bosses that can be inserted in the previously mentioned annular shapes (7); with the particularity that the mentioned structures (7) and (8) remain defined in a situation which makes that the connection between them established before the frame supporting plane (1).

5. Modular set for an electrical switching mechanism, according to the first claim, **characterized in that** the accessory fittings (6) of the sides have some T-shaped lugs (10), by means of which some hooking connections are established in connection with corresponding notches (11) in the sides of the cover plate (4); while at the mentioned sides of the cover plate (4) some prominent points (12) stand out, which determine the retention of the mentioned accessory fittings (6) in the assembly.

6. Modular set for an electrical switching mechanism, according to the first claim, **characterized in that** the keys (5) which activate the devices are incorporated in a switchable assembly on the supporting structures (14) defined in the intermediate piece (3), being foreseen the keys themselves (5) at the sides of the supporting seats (15) with some prominent lugs (16) by means of which an assuring retention of the assembly with respect to the intermediate piece itself (3) is established.

7. A modular set for an electrical switching mechanism, according to claim 1, further comprising an intermediate frame (18) mounted on the intermediate piece (3), behind the or each key, the intermediate frame having lugs (19) projecting therefrom which engage an inner edge of the intermediate piece (3), the lugs (19) having limbs (21) extending therefrom to provide damping stops for the or each key during tilting.

8. Modular set for an electrical switching mechanism, according to the seventh claim, **characterized in that** the intermediate frame (18) is foreseen as a realization (18.1) for the assembly of keys divided into two independent halves (5.1), determining the mentioned frame (18.1) a central bridge (22) over which the tiltable support of the semi-keys (5.1) is established, the mentioned bridge (22) includes at the central area some hooking devices (23) to retain the independent semi-keys (5.1).

## Patentansprüche

1. Ein modularer Satz für einen elektrischen Schaltmechanismus, aufweisend:
einen Metallrahmen (1), ein Zwischenstück (3) und eine Deckplatte (4), an der ergänzende Seitenarmaturen (6) angebracht sind, wobei der obere Teil der Deckplatte einen oder mehrere Schalter (5) zur Bedienung des elektrischen Schaltmechanismus einschließt, **dadurch gekennzeichnet, dass** das Zwischenstück (3) und die Deckplatte (4) in Gestalt eines einheitlichen Bauteils miteinander verbunden sind, das durch Einpressen im Rahmen (1) angebracht wird, so dass eine Baugruppe entsteht, und dass der Schalter bzw. jeder Schalter (5) schwenkbar auf der Baugruppe angebracht und befestigt ist, so dass er relativ zum Zwischenstück kippbar ist.

2. Modularer Satz für einen elektrischen Schaltmechanismus nach Anspruch 1, **dadurch gekennzeichnet, dass** die Einheit von Zwischenstück (3) und Deckplatte (4) durch thermisches Schweißen hergestellt wird, wobei die Wirkung des thermischen Schweißens und damit die Bildung der Einheit mit Hilfe einiger vorstehender Rippen (9) am oberen Teil des Zwischenstücks (3) erreicht wird.

3. Modularer Satz für einen elektrischen Schaltmechanismus nach Anspruch 1 oder 2, **dadurch gekennzeichnet, dass** die Deckplatte (4) das Zwischenstück (3) vollständig verbirgt, so dass Letzteres innerhalb der Baugruppe vollständig unsichtbar bleibt.

4. Modularer Satz für einen elektrischen Schaltmechanismus nach Anspruch 1, **dadurch gekennzeichnet, dass** die Befestigung des Satzes durch das Zwischenstück (3) und die Deckplatte (4) im Grundrahmen (1) mit Hilfe einiger ineinander passender Strukturen (7) und (8) erfolgt, die durch das Material des Zwischenstücks (3) und des Rahmens (1) selbst umrissen werden, wobei die Strukturen (7) die Gestalt einiger offener Ringe haben, während die Strukturen (8) einige nach außen hin konische runde Vorsprünge darstellen, die in die Ringe (7) einführbar sind, wobei eine Besonderheit darin besteht, dass die Verbindung zwischen den Strukturen (7) und (8) vor der den Rahmen tragenden Ebene (1) hergestellt wird.

5. Modularer Satz für einen elektrischen Schaltmechanismus nach Anspruch 1, **dadurch gekennzeichnet, dass** die ergänzenden Seitenarmaturen (6) einige T-förmige Ansätze (10) haben, mit deren Hilfe einige Hakenverbindungen mit entsprechenden Kerben (11), die sich in den Seiten der Deckplatte (4) befinden, hergestellt werden, während aus den Seiten der Deckplatte (4) einige Punkte (12) hervorspringen, die die ergänzenden Armaturen (6) in der Baugruppe arretieren.

6. Modularer Satz für einen elektrischen Schaltmechanismus nach Anspruch 1, **dadurch gekennzeichnet, dass** die Schalter (5), die die Vorrichtungen aktivieren, in eine schaltbare Baugruppe auf den Halterungen (14) im Zwischenstück (3) integriert sind, wobei die Schalter (5) selbst an den Seiten der Befestigungsflächen (15) einige vorstehende Ansätze (16) haben, mit deren Hilfe die Baugruppe im Zwischenstück (3) selbst arretiert wird.

7. Ein modularer Satz für einen elektrischen Schaltmechanismus nach Anspruch 1, weiterhin aufweisend einen Zwischenrahmen (18), der hinter dem Schalter bzw. jedem Schalter auf dem Zwischenstück (3) angebracht ist, wobei der Zwischenrahmen vorspringende Ansätze (19) hat, die in eine Innenkante des Zwischenstücks (3) eingreifen, wobei sich von den Ansätzen (19) aus Schenkel (21) erstrecken, die den Schalter bzw. jeden Schalter während der Kippbewegung dämpfend stoppen.

8. Modularer Satz für einen elektrischen Schaltmechanismus nach Anspruch 7, **dadurch gekennzeichnet, dass** der Zwischenrahmen (18) in einer Ausführungsform (18.1) für die Montage von Schaltern vorgesehen ist, die in zwei unabhängige Hälften (5.1) unterteilt sind, wobei der Rahmen (18.1) einen zentralen Steg (22) aufweist, über dem die Schalterhälften (5.1) kippbar angebracht werden, wobei der Steg (22) in seiner Mitte einige Einhakvorrichtungen (23) zur Arretierung der unabhängigen Schalterhälften (5.1) einschließt.

## Revendications

1. Ensemble modulaire pour un mécanisme de commutation électrique, comprenant : un cadre métallique (1), une pièce intermédiaire (3) et une plaque de recouvrement (4), sur laquelle des accessoires latéraux complémentaires (6) sont montés, la partie supérieure de la plaque de recouvrement comprenant une ou plusieurs touches (5) pour actionner le mécanisme de commutation électrique ; **caractérisé en ce que** la pièce intermédiaire (3) et la plaque de recouvrement (4) sont unies afin de réaliser un élément unique qui est relié au cadre (1), par assemblage à force, afin de former un ensemble ; et **en ce que** la ou chaque touche (5) est montée de manière pivotante sur, et fixée à, l'ensemble afin de basculer par rapport à la pièce intermédiaire.

2. Ensemble modulaire pour un mécanisme de commutation électrique selon la première revendication, **caractérisé en ce que** l'union entre la pièce intermédiaire (3) et la plaque de recouvrement (4) est établie par thermosoudage, l'union mentionnée étant effectuée au moyen de nervures verticales (9) au niveau de la partie supérieure de la pièce intermédiaire (3), par lesquelles le thermosoudage devient effectif.

3. Ensemble modulaire pour un mécanisme de commutation électrique selon la première ou la deuxième revendication, **caractérisé en ce que** la plaque de recouvrement (4) cache complètement la pièce intermédiaire (3), laissant cette dernière entièrement invisible dans l'ensemble.

4. Ensemble modulaire pour un mécanisme de commutation électrique selon la première revendication, **caractérisé en ce que** la fixation de l'ensemble formé par la pièce intermédiaire (3) et la plaque de recouvrement (4) par rapport au cadre de base (1) est établie au moyen de structures réciproques (7) et (8) définies par le matériau de la pièce intermédiaire (3) et du cadre (1) eux-mêmes, les structures (7) présentant la forme de bagues ouvertes, tandis que les structures (8) sont déterminées comme des bossages coniques vers l'extérieur qui peuvent être insérés dans les formes annulaires (7) mentionnées précédemment ; avec pour particularité que les structures (7) et (8) mentionnées restent définies dans une situation qui fait que la liaison entre elles est établie avant le plan de support de cadre (1).

5. Ensemble modulaire pour un mécanisme de commutation électrique selon la première revendication, **caractérisé en ce que** les accessoires (6) des côtés comportent des languettes en forme de T (10), au moyen desquelles des liaisons d'accrochage sont établies en relation avec des encoches correspondantes (11) dans les côtés de la plaque de recouvrement (4) ; tandis qu'au niveau des côtés mentionnés de la plaque de recouvrement (4), des points proéminents (12) font saillie, lesquels déterminent le maintien des accessoires (6) mentionnés dans l'ensemble.

6. Ensemble modulaire pour un mécanisme de commutation électrique selon la première revendication, **caractérisé en ce que** les touches (5) qui activent les dispositifs sont incorporées dans un ensemble commutable sur les structures de support (14) définies dans la pièce intermédiaire (3), les touches (5) elles-mêmes étant pourvues au niveau des côtés des sièges de support (15) de languettes proéminentes (16) au moyen desquelles un maintien sûr de l'ensemble par rapport à la pièce intermédiaire (3) elle-même est établi.

7. Ensemble modulaire pour un mécanisme de commutation électrique selon la revendication 1, comprenant en outre un cadre intermédiaire (18) monté sur la pièce intermédiaire (3), derrière la ou chaque touche, le cadre intermédiaire comportant des languettes (19) faisant saillie de celui-ci qui se mettent en prise avec un bord intérieur de la pièce intermédiaire (3), les languettes (19) comportant des bras (21) s'étendant à partir de celles-ci afin de réaliser des butées d'amortissement pour la ou chaque touche pendant le basculement.

8. Ensemble modulaire pour un mécanisme de commutation électrique selon la septième revendication, **caractérisé en ce que** le cadre intermédiaire (18) est prévu comme une réalisation (18.1) pour l'ensemble de touches divisées en deux moitiés indépendantes (5.1), déterminant dans le cadre (18.1) mentionné un pont central (22) sur lequel le support basculant des demi-touches (5.1) est établi, le pont (22) mentionné comprend, au niveau de la zone centrale, des dispositifs d'accrochage (23) afin de retenir les demi-touches (5.1).
